(19) Europäisches Patentamt
European Patent Office
Office européen des brevets

(11) **EP 3 599 377 B1**

(12) **EUROPÄISCHE PATENTSCHRIFT**

(45) Veröffentlichungstag und Bekanntmachung des Hinweises auf die Patenterteilung:
**04.11.2020   Patentblatt 2020/45**

(51) Int Cl.:
*F04B 13/00* (2006.01)      *F04B 49/06* (2006.01)
*F04B 51/00* (2006.01)      *F04B 15/02* (2006.01)

(21) Anmeldenummer: **18185230.2**

(22) Anmeldetag: **24.07.2018**

(54) **VERFAHREN ZUM BESTIMMEN EINES MITTELS EINER KOLBENPUMPE GEFÖRDERTEN VOLUMENS SOWIE DOPPELTWIRKENDE, PNEUMATISCH ANTREIBBARE KOLBENPUMPE ZUR DURCHFÜHRUNG DES VERFAHRENS**

METHOD FOR DETERMINING A VOLUME TRANSPORTED BY MEANS OF A PISTON PUMP AND DOUBLE-ACTING, PNEUMATICALLY DRIVEN PISTON PUMP FOR CARRYING OUT THE METHOD

PROCÉDÉ DE DÉTERMINATION D'UN VOLUME TRANSPORTÉ AU MOYEN D'UNE POMPE À PISTON AINSI QUE POMPE À PISTON À DOUBLE EFFET ET PNEUMATIQUE, DESTINÉE À LA MISE EN ŒUVRE DUDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.01.2020   Patentblatt 2020/05**

(73) Patentinhaber: **Robatech AG**
**5630 Muri (CH)**

(72) Erfinder:
• **MÖSLI, Urs**
**8405 Winterthur (CH)**
• **FELIX, Hanspeter**
**4800 Zofingen (CH)**
• **HOFER, Andreas**
**5222 Umiken (CH)**

(74) Vertreter: **Franke, Markus et al**
**Quermann Sturm Weilnau**
**Patentanwälte Partnerschaft mbB**
**Unter den Eichen 5**
**65195 Wiesbaden (DE)**

(56) Entgegenhaltungen:
**EP-A2- 2 732 884      WO-A1-2016/010597**
**US-B2- 9 243 626**

**Beschreibung**

Die Erfindung betrifft ein Verfahren zum Bestimmen eines von einer doppeltwirkenden, pneumatisch angetriebenen Kolbenpumpe zu einem Verbraucher effektiv geförderten Volumens eines flüssigen Mediums, insbesondere eines erhitzten Klebstoffs.

Auf dem Gebiet des Auftragens von Klebstoffen, insbesondere dem Gebiet des Förderns von viskosen Schmelzklebstoffen besteht der Wunsch, die aufgetragene Klebstoffmenge möglichst genau zu kennen. Es sollte möglichst pro Produkt ermittelt werden können, ob die korrekte Klebstoffmenge aufgetragen wurde. Daraus können statistische Informationen, Trendanzeigen und Beurteilungen, ob die Produkte in der geforderten Qualität hergestellt wurden, abgeleitet werden. Bei vielen Produkten ist die aufgetragene Klebstoffmenge sehr klein, sodass sich diese Aussagen nicht auf jedes einzelne individuelle, verarbeitete Produkt beziehen lassen, sondern nur auf den Mittelwert über eine Anzahl Produkte. Daraus ergibt sich die Forderung, dass die Genauigkeit von einem gemessenen Klebstoff-Volumenstrom oder Massenstrom besser als ungefähr $\pm$ 7 % sein sollte.

Aus der WO 2016/010597 A1 ist eine Einrichtung zum Bestimmen der Ausgabe eines Fördervolumens eines erhitzten Klebstoffs bekannt, wobei diese Einrichtung eine doppeltwirkende, pneumatisch angetriebene Kolbenpumpe aufweist. Zur Erfassung des Fördervolumens der Kolbenpumpe ist ein Positionssensor für eine Kolbenstange der Kolbenpumpe vorgesehen. Es erfolgt demnach eine Berechnung des Fördervolumens aufgrund Kenntnis der jeweiligen Kolbenposition.

Aus der EP 2 732 884 A2 ist ein Klebstoffausgabesystem und ein hierauf bezogenes Verfahren bekannt. Das System weist ein Diagnosemodul auf, das u.a. der Bestimmung des von der Pumpe ausgegebenen Volumenstroms dient. Es wird ein Leckage-Test angewendet, um die Dichtheit der Pumpe zu testen. Bei der Pumpe handelt es sich um eine doppeltwirkende, pneumatisch angetriebene Kolbenpumpe.

In der EP 1 907 806 B1 ist eine Hubkolbenpumpe mit elektronisch überwachtem Luftventil und Kolben beschrieben. Die Pumpe umfasst einen Kolben, des Weiteren einen Sensor zum Detektieren der Position des Kolbens.

Eine Kolbenpumpe ist aufgrund deren Aufbaus eine volumetrisch fördernde Pumpe. In der Praxis finden doppeltwirkende, pneumatisch angetriebene Kolbenpumpen Verwendung, bei denen bewusst zwischen Kolben und Zylinder eine gewisse Leckage stattfindet und auch die Führung der Kolbenstange, die sich an den Druckraum der Kolbenpumpe anschließt, nicht dichtend ausgeführt ist.

Um einen möglichst kontinuierlichen Volumenstrom des flüssigen Mediums, insbesondere des erhitzten Klebstoffs fördern zu können, fördert die Kolbenpumpe in beiden Hubrichtungen des Kolbens. Es handelt sich um eine doppeltwirkende Kolbenpumpe. Um dies zu ermöglichen, sind zwei Rückschlagventile vorhanden, die nicht identische Bauformen aufweisen. Während des Umkehrvorgangs am unteren und oberen Totpunkt des Kolbens, während des Betätigens der Rückschlagventile, tritt ein geringfügiger Verlust vom Volumenstrom auf. Dieser Verlust ist am oberen und am unteren Totpunkt unterschiedlich groß. Dieser Verlust ist insbesondere abhängig von der Viskosität und den Fließeigenschaften des flüssigen Mediums bzw. verwendeten Klebstoffs.

Um Verschleiß zu minimieren, Wartungsarbeiten zu vermeiden und eine möglichst lange Lebensdauer zu erreichen, ist der Kolben der Pumpe nicht dichtend ausgeführt. Zwischen Kolben und Zylinder findet also eine gewisse Leckage statt. Diese Leckage ist vor allem abhängig von der Viskosität und vom Fließverhalten des flüssigen Mediums/flüssigen Klebstoffs, von der Größe des Ringspalts um den Kolben und von der Geschwindigkeit der Kolbenbewegung.

Ebenfalls ist die Führung der Kolbenstange, die sich an den Druckraum anschließt, nicht dichtend ausgeführt. Zwischen Kolbenstange und Führung findet eine gewisse Leckage statt. Dieser Leckage-Volumenstrom wird vorzugsweise in einen Tank/Klebstofftank zurück geleitet. Diese Leckage ist vor allem abhängig von der Viskosität und dem Fließverhalten des flüssigen Mediums/Klebstoffs, von der Größe des Ringspalts um die Kolbenstange und von der Geschwindigkeit der Hubbewegung, ferner von dem Verbrauch des flüssigen Mediums/flüssigen Klebstoffs bzw. wie viele Ventile von Auftragsvorrichtungen gerade geöffnet sind.

Die Geschwindigkeit des Kolbens wird vor allem durch den Druck der Druckluft bestimmt, die auf den Antrieb der Kolbenpumpe wirkt.

Üblicherweise verfügt die Kolbenpumpe über keine Einrichtung zur Ermittlung der Kolbenposition. Einzig an den Umschaltpositionen sind Sensoren vorhanden, die den Antrieb der Kolbenpumpe steuern und ein Umschalten der Hubrichtung bewirken. Grundsätzlich kann die Kolbenposition durch zwei Hall-Sensoren detektiert werden.

Für den Anwender der Kolbenpumpe ist es von Bedeutung, die ausgegebene Masse des flüssigen Mediums bzw. aufgetragene Klebstoffmasse pro Produkt zu kennen.

Aufgabe der vorliegenden Erfindung ist es, ein Verfahren zum präzisen Bestimmen eines von einer Leckage behafteten, doppeltwirkenden, pneumatisch angetriebenen Kolbenpumpe zu einem Verbraucher effektiv geförderten Volumens anzugeben.

Gelöst wird die Aufgabe durch ein Verfahren, das die Merkmale des Patentanspruchs 1 aufweist. Weiterbildungen der Erfindung sind Gegenstand der Unteransprüche.

Die Erfindung schlägt ein Verfahren zum Bestimmen eines von einer doppeltwirkenden, pneumatisch angetriebenen Kolbenpumpe zu einem Verbraucher effektiv geförderten Volumenstroms $V_{eff}$ eines flüssigen Mediums, insbesondere eines erhitzten Klebstoffs, wobei die Kolbenpumpe Leckage behaftet ist, mit folgenden Merkmalen, bei Einwirkung eines konstanten Drucks auf einen Antrieb der Kolbenpumpe und Ausführung mindestens eines Doppelhubs einer Kolbenpumpe von deren einen Totpunkt zu deren anderen Totpunkt und zurück zum einen Totpunkt, vor:

a. ohne dass die Kolbenpumpe das Medium zum Verbraucher fördern kann, wird eine Leckagezeit $t_{L\,auf}$ für einen Hub der Kolbenpumpe von deren unterem Totpunkt bis zu deren oberem Totpunkt gemessen,

b. ohne dass die Kolbenpumpe das Medium zum Verbraucher fördern kann, wird eine Leckagezeit $t_{L\,ab}$ für einen Hub der Kolbenpumpe von deren oberem Totpunkt bis zu deren unterem Totpunkt gemessen,

c. für den Hub der Kolbenpumpe vom unteren Totpunkt zum oberen Totpunkt wird ein Quotient zwischen einem theoretisch ohne Leckage geförderten Volumen des Mediums $V_{auf}$ der Kolbenpumpe und der Leckagezeit $t_{L\,auf}$ ermittelt,

d. für den Hub der Kolbenpumpe vom oberen Totpunkt zum unteren Totpunkt wird ein Quotient zwischen einem theoretisch ohne Leckage geförderten Volumen $V_{ab}$ der Kolbenpumpe und der Leckagezeit $t_{L\,ab}$ ermittelt.

e. beim Fördern des Mediums zum Verbraucher wird für den Hub der Kolbenpumpe vom unteren Totpunkt zum oberen Totpunkt die Zeit $t_{auf}$ und für den Hub der Kolbenpumpe vom oberen Totpunkt zum unteren Totpunkt die Zeit $t_{ab}$ gemessen,

f. das effektiv geförderte Volumen $V_{eff}$ wird gemäß

$$V_{eff} = \left( V_{auf} - \frac{V_{auf}}{t_{L\,auf}} \times t_{auf} \right) + \left( V_{ab} - \frac{V_{ab}}{t_{L\,ab}} \times t_{ab} \right)$$

multipliziert mit der Anzahl der Doppelhübe ermittelt.

Bei dem Verfahren wird somit als einfach zu ermittelnde physikalische Größe die Leckagezeit bei den gleichen Betriebsbedingungen ermittelt, bei denen nachfolgend produziert werden soll. Die wichtigsten Betriebsbedingungen sind, bezogen auf die Anwendung des Verfahrens bei einem erhitzten Klebstoff der Klebstofftyp, die Klebstofftemperatur und der Druck der Druckluft für den Antrieb der Kolbenpumpe.

Da die doppeltwirkende, pneumatisch angetriebene Kolbenpumpe Leckage behaftet ist, insbesondere der Kolben der Pumpe und die Rückschlagventile eine gewisse Leckage darstellen, bewegt sich die Kolbenpumpe in betriebsbereitem Zustand auch ohne Verbrauch des flüssigen Mediums/Klebstoffs stets geringfügig. Um alle Verluste zu berücksichtigen, wird die Zeit gemessen, während der die Kolbenpumpe einen oder mehrere vollständige Doppelhübe durchführt. Diese Leckagezeit wird zusammen mit dem Druck der Luft für die Berechnung der effektiven Leckage verwendet. - Ein Vorteil ist, dass die Ermittlung der Leckagezeit ermittelt werden kann, ohne dass flüssiges Medium/flüssiger Klebstoff gefördert werden muss und damit kein Medium/Klebstoff verloren geht. Die Leckagezeit ist somit diejenige Zeit, die verstreicht, bis die Kolbenpumpe in betriebsbereitem Zustand und ohne dass flüssiges Medium/flüssiger Klebstoff abgegeben wird, einen oder mehrere vollständige Doppelhübe ausgeführt hat.

Die Leckagezeit des Doppelhubs teilt sich auf in die Zeit für den Aufwärtshub (Bewegung des Kolbens vom unteren Totpunkt zum oberen Totpunkt) und die Zeit für den Abwärtshub (Bewegung des Kolbens vom oberen Totpunkt bis zum unteren Totpunkt). Die Zeiten für die beiden Hubbewegungen sind unterschiedlich groß. Auf einfache Weise lassen sich mit diesen beiden Zeiten über lineare Beziehungen die effektiv geförderten Volumen für jede Hubrichtung berechnen.

Abgesehen von der Ermittlung des effektiv geförderten Volumens der Leckage behafteten Kolbenpumpe ist es in der Praxis oft relevant, auch eine von der Kolbenpumpe ausgegebene Masse des flüssigen Mediums, konkret die aufgetragene Klebstoffmasse pro Produkt zu kennen. Die Masse wird vorzugsweise in zwei Schritten ermittelt. Zuerst wird mit Hilfe der berechneten Leckage das pro Zeiteinheit geförderte Volumen des flüssigen Mediums, insbesondere das Klebstoffvolumen, und die Anzahl der verarbeiteten Produkte ermittelt. In einem zweiten Schritt wird die Masse mit einer vorgängig ermittelten Dichte des flüssigen Mediums/Klebstoffs ermittelt. Es müssen somit Informationen zur Leckage und zur Dichte ermittelt werden, bevor die geförderte Masse berechnet werden kann.

Es hat sich gezeigt, dass es zwei einfache Verfahren gibt, die durchgeführt werden müssen, bevor die Berechnung erfolgen kann. Einerseits ist die vorstehend beschriebene Leckagezeit zu ermitteln. Andererseits ist die Dichte des flüssigen Mediums/Klebstoffs zu ermitteln.

Insbesondere bei der Verwendung von flüssigem Klebstoff ist dessen Dichte von der Temperatur des Klebstoffs und vom Klebstofftyp abhängig. Das effektiv geförderte Volumen ist abhängig von den Fertigungstoleranzen der Kolbenpumpe und allenfalls von einem vorhandenen Verschleiß. Um dies berücksichtigen zu können, wird während einer weitgehend frei wählbaren Zeitdauer, die mehrere komplette Hubzyklen der Kolbenpumpe umfassen sollte, Klebstoff gefördert und gleichzeitig die Menge gemäß dem hier beschriebenen Verfahren berechnet. Um die Menge konkret berechnen zu können, muss vorgängig die Leckagezeit gemessen werden. Der geförderte Klebstoff wird aufgefangen und gewogen. Nach Eingabe der geförderten Masse, kann ein Korrekturfaktur bestimmt werden, der zur Kalibration der Berechnung verwendet wird. Dieser Korrekturfaktur kann als Dichte vom Klebstoff dargestellt werden.

Mittels dieser zwei gemessenen Größen, der Leckagezeit und dem Korrekturfaktor für die Massenberechnung, ist es möglich, die geförderte Masse auf $\pm$ 7 % genau zu berechnen.

Die beiden Messungen der Leckagezeit und des Korrekturfaktors werden wiederholt, sobald mit einer geänderten Temperatureinstellung oder einem anderen flüssigen Medium/anderen Klebstofftyp produziert wird, damit weiterhin die gewünschte Genauigkeit der Berechnung von $\pm$ 7 % eingehalten werden kann.

Wenn sich der Luftdruck für den Antrieb der Kolbenpumpe ändert, lässt sich diese Auswirkung ohne weiteres über eine geeignete Berechnung kompensieren. Diese Berechnung erfolgt insbesondere empirisch. Hiermit muss bei einer Änderung des Luftdrucks der Kolbenpumpe keine neue Kalibration erfolgen.

Die bestimmten Leckagezeiten und Korrekturfaktoren werden vorzugsweise pro Klebstofftyp und Temperatur sinnvollerweise abgespeichert, damit sie für spätere Produktionen unter vergleichbaren Bedingungen wieder verwendet werden können, ohne dass eine erneute Bestimmung erforderlich wäre. Die Ermittlung eines Datenfeldes könnte auch pro Klebstofftyp vorgängig erfolgen und abgespeichert werden, damit der Anwender nicht durch Abgleichvorgänge in der Produktion behindert wird.

Um einen zusätzlichen Nutzen zu generieren, wäre es möglich, bei starken Abweichungen der aktuell gemessenen Leckagezeiten von den abgespeicherten Werten einen Verschleiß der Kolbenpumpe festzustellen.

Die Messung der Leckagezeit kann automatisch vor dem Beginn einer Produktion erfolgen. Der Anwender kann die Uhrzeit vom Ende und vom Beginn seiner Produktion programmieren. Ein Schmelzgerät zum Schmelzen des Klebstoffs schaltet sich dann rechtzeitig vor dem vorgegebenen Produktionsbeginn ein, damit die Betriebstemperatur vor Produktionsbeginn erreicht ist. Die Steuerung könnte so programmiert werden, dass das Einschalten etwas früher erfolgt, damit bei erreichter Betriebstemperatur vor dem Produktionsstart die Leckagezeit automatisch gemessen werden kann. Dann würde der Anwender von diesem Messvorgang nichts bemerken. Solange die Messung der Leckagezeit nicht abgeschlossen wäre, würde keine Produktionsfreigabe für eine übergeordnete Steuerung vorliegen. Die Messung der Leckagezeit sollte auch manuell vom Bediener gestartet werden können.

Wenn nur die Endstellungen der Kolbenpumpe gemessen werden können, lassen sich keine Zwischenstellungen des Kolbens exakt bestimmen. Als Abhilfe für eine kleinere Auflösung der dosierten Klebstoffmenge kann die Zeit verwendet werden, die seit dem letzten Umschalten verstrichen ist. Damit lässt sich eine Zwischenstellung des Kolbens und der damit geförderten Klebstoffmenge normalerweise ausreichend genau interpolieren.

Eine noch größere Genauigkeit der Bestimmung der aufgetragenen Klebstoffmenge pro verarbeitendem Produkt lässt sich erreichen, indem die Kolbenposition der Pumpe gemessen wird.

Insbesondere ist vorgesehen, dass Umkehrpositionen eines Kolbens der Kolbenpumpe und/oder Zwischenpositionen des Kolbens zwischen dessen Umkehrpunkten mittels Hall-Sensoren ermittelt werden.

Vorzugsweise wir das effektiv geförderte Volumen $V_{eff}$ und/oder die geförderte Masse m aufgrund Kenntnis der Position des Kolbens berechnet.

Die Berechnung der aufgetragenen Masse von Klebstoff im vorbeschriebenen Sinne stellt eine besonders einfache Möglichkeit dar. Mit geringem Zusatzaufwand, der sich zu einem Großteil aus dem Aufwand für die Software zusammensetzt, kann für den Anwender ein zusätzlicher Nutzen generiert werden. Die Nachrüstung der Messung vom Klebstoffauftrag lässt sich einfach und mit geringem Aufwand realisieren.

Insbesondere ist vorgesehen, dass das während des Förderns des effektiv geförderten Volumens $V_{eff}$ geförderte Medium bezüglich seiner Masse m bestimmt wird und dann die Dichte D des Mediums gemäß

$$D = \frac{m}{V_{eff}}$$

berechnet wird.

Vorzugsweise wird beim Fördern des Mediums zum Verbraucher laufend die geförderte Masse des Mediums berechnet, indem das nach obigem Verfahren berechnete Volumen mit der maßgebenden Dichte D multipliziert wird.

Insbesondere werden nach jeder Änderung der Temperatureinstellungen des zum Verbraucher zu fördernden Mediums und/oder nach jeder Änderung des flüssigen Mediums, insbesondere des erhitzten Klebstoffs, und/oder jeder Änderung des auf den Antrieb der Kolbenpumpe wirkenden Drucks die Verfahrensschritte wiederholt. Insbesondere werden die Leckagezeiten $t_{L\,auf}$ und $t_{L\,ab}$ und/oder eine Gesamtleckagezeit $t_{Leck}$ vor Beginn einer Produktion, insbesondere automatisch vor Beginn der Produktion gemessen.

Insbesondere werden Leckagezeiten und/oder Korrekturfaktoren pro Mediumtyp, insbesondere Klebstofftyp, und Temperatur abgespeichert, zwecks Verwendung bei späteren Produktionen unter vergleichbaren Bedingungen, ohne erforderliche erneute Bestimmung.

Insbesondere wird bei einer Veränderung des Drucks auf den Antrieb der Kolbenpumpe die zum Ausgangsdruck gemessenen Leckagezeiten $t_{L\,auf}$ und $t_{L\,ab}$ bzw. deren Gesamtleckagezeit $t_{Leck}$ anhand eines auf Versuchen basierenden Berechnungsmodells korrigiert.

Insbesondere werden bei Ermittlung von starken Abweichungen der aktuell gemessenen Leckagezeiten von abgespeicherten Werten der Leckagezeiten eine Fehlermeldung, insbesondere betreffend Verschleiß der Kolbenpumpe, ausgegeben.

Die bei dem erfindungsgemäßen Verfahren und bei den Weiterbildungen dieses Verfahrens Verwendung findende Kolbenpumpe ist insbesondere als doppeltwirkende, pneumatisch antreibbare Kolbenpumpe ausgebildet, mit einem nicht dichtend bezüglich eines Zylinders ausgeführten Kolben, mit einer nicht dichtend bezüglich einer Führung ausgeführten Kolbenstange und mit zwei Rückschlagventilen, wobei je nach Bewegungsrichtung des Kolbens das eine Rückschlagventil offen und das andere Rückschlagventil geschlossen ist.

Die Rückschlagventile sind insbesondere unterschiedlich gestaltet.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines Ausführungsbeispiels veranschaulicht, ohne auf dieses beschränkt zu sein. Es zeigt:

Fig. 1 eine Applikationseinheit für Heißklebstoff mit einem Klebstofftank und einer in diesen eingebauten Klebstoffpumpe,

Fig. 2 die in Fig. 1 gezeigte Klebstoffpumpe in einer Schnittdarstellung, mit Überströmkanal,

Fig. 3 für den Teilbereich der Kolbenpumpe deren Darstellung bei einem Kolbenhub nach oben,

Fig. 4 für den Teilbereich der Kolbenpumpe deren Darstellung bei einem Kolbenhub nach unten,

Fig. 5 ein Diagramm zur Veranschaulichung des Leckageverhaltens der doppeltwirkenden, pneumatisch angetriebenen Kolbenpumpe beim Verfahren des Kolbens vom unteren Totpunkt in den oberen Totpunkt und vom oberen Totpunkt in den unteren Totpunkt (Leckagevolumen in Abhängigkeit von der Hubzeit),

Fig. 6 ein Diagramm zur Verdeutlichung der gemessenen Leckagezeiten in Abhängigkeit vom auf den Antrieb der Kolbenpumpe wirkenden Druck, verdeutlicht für unterschiedliche erhitzte Klebstoffe, somit unterschiedliche Viskositäten des flüssigen Mediums, wobei aus den gemessenen Punkten Kurven errechnet sind.

Figurenbeschreibung

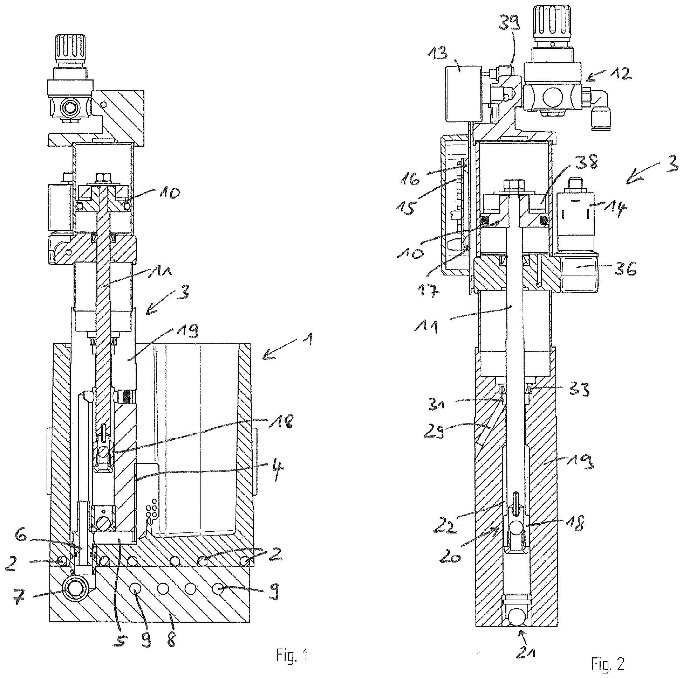

Fig. 1 zeigt einen Klebstofftank 1 zur Aufnahme eines viskosen Schmelzklebstoffes, beispielsweise auf Basis von EVA. Heizelemente 2 des Klebstofftanks 1 dienen dem Aufheizen des Klebstoffs, sodass er schmilzt und auf seine Verarbeitungstemperatur gebracht werden kann. In den Klebstofftank 1 ist eine Kolbenpumpe 3 eingesetzt und mit dieser befestigt. Bei der Kolbenpumpe 3 handelt es sich um eine doppeltwirkende, somit in beiden Hubrichtungen des Kolbens wirksame Pumpe. Die Kolbenpumpe 3 wird pneumatisch angetrieben. Im Zuströmbereich des Klebstoffs vom Klebstofftank 1 zur Kolbenpumpe 3 ist ein Lochblech 4 zur Zurückhaltung von nicht vollständig aufgeschmolzenem, festem Klebstoff angeordnet. Der Klebstoff gelangt durch die Löcher des Lochblechs 4 in einen Ansaugraum 5 für Klebstoff unterhalb der Kolbenpumpe 3. Von dort wird der Klebstoff in die Kolbenpumpe 3 angesaugt und unter Druck über einen Druckanschluss 6 ausgegeben. Stromabwärts des Druckanschlusses 6 befindet sich ein Klebstofffilter 7. Klebstoff gelangt von dort in einen Druckverteiler 8 zu Abgängen 9 für Klebstoffverbraucher.

Fig. 2 zeigt die Ausbildung der Kolbenpumpe 3. Diese weist einen oberen Pneumatikteil mit einem Kolben 10 für den Antrieb auf. Der Kolben 10 ist fest mit einer Kolbenstange 11 verbunden, die das aktive Element zum Fördern des Klebstoffs unter Druck darstellt. Dieser pneumatische Bereich der Kolbenpumpe 3 weist ferner einen Druckverteiler 36 für Pneumatik zum Antrieb der Pumpe, einen manuell verstellbaren Druckregler 12, ein Manometer 13, ein Solenoid-Ventil 14, einen Ringmagnet 38 und einen Drucksensor 39 auf. Der Drucksensor 39 dient der Messung des Luftdrucks P, der auf den Antrieb der Kolbenpumpe 3 wirkt. Der Drucksensor 39 ist nach dem Druckregler 12 eingebaut. Der Drucksensor 39 ist bei einer automatischen Korrekturberechnung bei geändertem Luftdruck P erforderlich. Zwei Hall-Sensoren 16, 17 dienen der Bestimmung der Kolbenposition in den Umkehrpunkten des Kolbens und dessen Zwischenpositionen. Mit Hilfe der Kolbenposition lässt sich das geförderte Volumen der Kolbenpumpe und die geförderte Masse berechnen, zur Erhöhung der Genauigkeit bzw. Auflösung der Berechnung.

Eine Elektronik der Kolbenpumpe 3 weist ferner einen Elektronikprint 15 ohne Prozessor auf.

Außerhalb des pneumatischen Teils der Kolbenpumpe 3, somit im Klebstoffförderbereich der Kolbenpumpe 3, weist diese im Bereich des dem Kolben 10 abgewandten Endes der Kolbenstange 11 eine Erweiterung auf, die einen doppeltwirkenden Kolben 18 bildet. Der Kolben 18 ist mit einem axialen Durchgang 28 versehen, im Bereich dessen das Rückschlagventil 20 mit zugehörigem Ventilsitz angeordnet ist. Ferner sind im Übergang des Kolbens 18 zu dem im Durchmesser reduzierten Bereich der Kolbenstange 11 Durchtrittsöffnungen 30 für Klebstoff vorgesehen. Der Kolben 18 ist nicht dichtend in einer in einem Gehäuse 19 bzw. Zylinder des Klebstoffförderbereichs ausgebildeten Zylinderbohrung 22 geführt. In diesem Bereich weist die Kolbenpumpe 3 ferner ein oberes Rückschlagventil 20 und ein unteres Rückschlagventil 21 auf. Das untere Rückschlagventil 21 ist dem Ansaugraum 5 zugeordnet, sodass Klebstoff vom Ansaugraum 5 am Rückschlagventil 21 vorbei in den Klebstoffförderraum der Kolbenpumpe 3 eintreten kann, wenn sich das Rückschlagventil 21 in einer definierten Position befindet. Befindet sich das obere Rückschlagventil 20 in einer definierten Position, kann Klebstoff am Rückschlagventil 20 vorbei zum Druckanschluss 6 und von dort zu den Abgängen 9 für die Klebstoffverbraucher gelangen.

Zwischen dem pneumatischen Teil und dem klebstofffördernden Teil der Kolbenpumpe 3 ist eine dynamische Dichtung 33 ohne Differenzdruck vorgesehen.

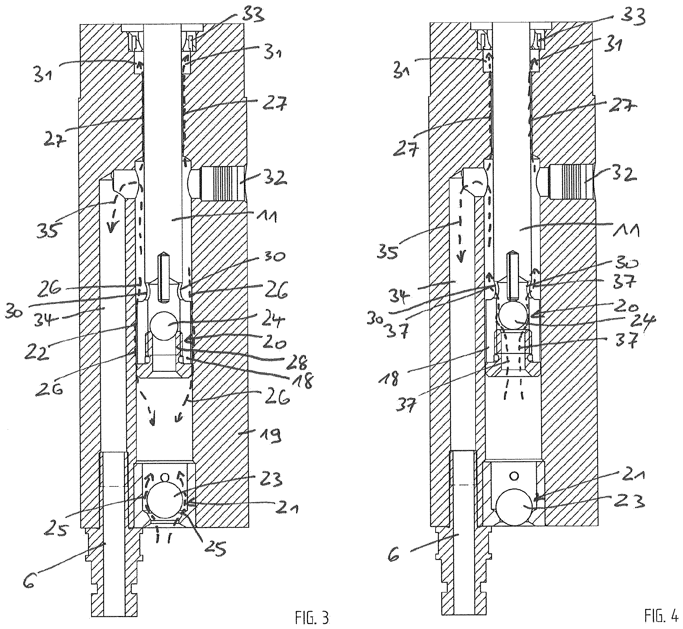

Fig. 3 zeigt die Situation beim Überführen des Kolbens 10 vom unteren Totpunkt zum oberen Totpunkt. Aufgrund der Kraft- und Strömungsverhältnisse ist eine Kugel 23 des unteren Rückschlagventils 21 von deren Kugelsitz abgehoben und es ist eine Kugel 24 des anderen Rückschlagventils 20 in Kontakt mit dem dieser Kugel 24 zugeordneten Kugelsitz. Demzufolge kann Klebstoff im Sinne der Pfeile 25 aus dem Klebstofftank 1 angesaugt werden und gelangt durch das in Offenstellung befindliche Rückschlagventil 21 in den Zylinderraum des Klebstoffförderbereichs der Kolbenpumpe 3, während, aufgrund der Hubbewegung des Kolbens 18 nach oben, Klebstoff durch einen seitlich angeordneten Druckkanal 34 und den sich in Strömungsrichtung an diesen anschließenden Druckanschluss 6, gemäß Pfeilen 35 ausgegeben wird. Bei dieser Bewegung des Kolbens 18 nach oben stellt sich wegen der nicht dichtenden Anordnung von Kolben 18 und mit dieser zusammenwirkenden Wand im Bereich der Zylinderbohrung 22 eine Leckageströmung gemäß der Pfeile 26 im Ringspalt zwischen Kolben 18 und Gehäuse 19 ein. Ferner ergibt sich im abströmenden Bereich des Klebstoffs eine Leckage zwischen der Kolbenstange 11 und dem Gehäuse 19 gemäß der Darstellung der Pfeile 27 in einen Raum 31 des Gehäuses 19 weiter oberhalb, in dem Umgebungsdruck herrscht. Dieser Raum 31 ist mit einem Überströmkanal 29 verbunden, der somit dem Überströmen von Leckage zwischen Kolbenstange 11 und Gehäuse 19 dient. Diese Leckage wird über den Überströmkanal 29 zum Klebstofftank 1 zurückgeführt.

Beim Hub der Kolbenstange 11 und damit der Kolben 10 und 18 vom unteren Totpunkt zum oberen Totpunkt wird somit gleichzeitig Klebstoff zu den Abgängen 9 gefördert und Klebstoff aus dem Klebstofftank 1 angesaugt. Es treten Leckage-Verluste zwischen der Kolbenstange 11 und dem Gehäuse 19 und zwischen dem Kolben 18 und dem Gehäuse 19 auf.

Fig. 4 veranschaulicht die Verhältnisse beim Verfahren der Kolbenstange 11 in entgegengesetzter Richtung, somit beim Bewegen der Kolbenstange 11 und damit der Kolben 10 und 18 vom oberen Totpunkt zum unteren Totpunkt. Hierbei wird nur Klebstoff gefördert. Es wird kein Klebstoff aus dem Klebstofftank 1 angesaugt. Der Klebstoff strömt gemäß Pfeil 37 durch den Durchgang 28 des Kolbens 18 nach oben, durch die Durchtrittsöffnungen 30 in den Ringraum zwischen Kolbenstange 11 und Gehäuse 19, und von dort gemäß Pfeil 35 durch den Druckkanal 34 zu den Abgängen 9. Es treten nur zwischen der Kolbenstange 11 und dem Gehäuse 19 Leckage-Verluste auf. Die Strömung zwischen den Kolben 18 und dem Gehäuse 19 hat keinen Einfluss auf die geförderte Klebstoffmenge.

Im Einzelnen ist bei dieser Bewegung der Kolbenstange 11 von oben nach unten die Kugel 23 in ihrer unteren Position bei Kontakt mit dem Kugelsitz, womit kein Zufluss vom Klebstofftank 1 möglich ist. Der Klebstoff strömt innen am Kolben 18 nach oben. Die Kugel 24 des oberen Rückschlagventils 20 ist vom Kugelsitz abgehoben, womit Klebstoff durch die Durchtrittsöffnungen 30 zum Druckanschluss 6 gefördert wird. Es ergibt sich eine Leckage gemäß der Pfeile 27 zwischen der Kolbenstange 11 und dem Gehäuse 19, somit zwischen dem Druckraum und dem Raum 31, in dem Umgebungsdruck herrscht.

Mit der Bezugsziffer 32 ist ein Verschlussstopfen veranschaulicht.

Nach jeder Änderung der Temperatureinstellung und nach jedem Klebstoffwechsel wird gemäß einer bevorzugten Verfahrensweise das nachfolgende Vorgehen wiederholt. Hierbei wird der nachfolgende Vorgang bei konstantem Druck, der auf den pneumatischen Antrieb der Kolbenpumpe wirkt, durchgeführt.

1. Ohne dass die Kolbenpumpe Klebstoff zum Verbraucher liefern kann, wird für die Zeit $t_{L\,auf}$ für einen kompletten Hub der Kolbenpumpe vom unteren Totpunkt bis zum oberen Totpunkt gemessen. Diese Zeit $t_{L\,auf}$ wird als Leckagezeit für die Aufwärtsbewegung vom Kolben benannt.

2. Ohne dass die Kolbenpumpe Klebstoff zum Verbraucher liefern kann, wird die Zeit $t_{L\,ab}$ für einen kompletten Hub der Kolbenpumpe vom oberen Totpunkt bis zum unteren Totpunkt gemessen. Diese Zeit $t_{L\,ab}$ wird als Leckagezeit für die Abwärtsbewegung vom Kolben benannt.

3. Die gesamte Leckagezeit $t_{Leck}$ für einen kompletten Doppelhub vom Kolben ergibt sich durch die Addition der beiden Leckagezeiten für den Aufwärtshub $t_{Lauf}$ und für den Abwärtshub $t_{L\,ab}$.

4. Für den Aufwärtshub wird das Verhältnis $m_{auf}$ zwischen dem geförderten Volumen und der Zeit für eine komplette Hubbewegung vom unteren Totpunkt bis zum oberen Totpunkt bestimmt. Dazu wird das theoretisch ohne Leckage geförderte Volumen $V_{auf}$ durch die Leckagezeit $t_{Lauf}$ geteilt.

5. Für den Abwärtshub wird das Verhältnis $m_{ab}$ zwischen dem geförderten Volumen und der Zeit für eine komplette Hubbewegung vom oberen Totpunkt bis zum unteren Totpunkt bestimmt. Dazu wird das theoretisch ohne Leckage geförderte Volumen $V_{ab}$ durch die Leckagezeit $t_{L\,ab}$ geteilt.

6. Im Betrieb, somit beim Fördern des Mediums zum Verbraucher, wird für jede komplette Hubbewegung der Kolbenpumpe die verstrichene Zeit gemessen. Für den Hub vom unteren Totpunkt bis zum oberen Totpunkt wird die Zeit $t_{auf}$ bestimmt. Für den Hub vom oberen Totpunkt bis zum unteren Totpunkt wird die Zeit $t_{ab}$ bestimmt.

7. Das effektiv geförderte Volumen $V_{eff}$ wir berechnet, indem für jeden Aufwärtshub vom theoretischen Fördervolumen $V_{auf}$ das Verhältnis $m_{auf}$ multipliziert mit der Zeit $t_{auf}$ abgezogen wird und indem für jeden Abwärtshub vom theoretischen Fördervolumen $V_{ab}$ das Verhältnis $m_{ab}$ multipliziert mit der Zeit $t_{ab}$ abgezogen wird.

8. Während einer beliebigen Zeitdauer t wird Klebstoff gefördert und in einem Auffangbehälter aufgefangen. Während dieser Zeitdauer t wird nach obigem Verfahren das effektiv geförderte Klebstoffvolumen $V_{eff}$ berechnet. Die Masse vom aufgefangenen Klebstoff m wird auf einer Waage gemessen. Daraus wird die Dichte D bestimmt durch Division der geförderten Masse m durch das effektiv geförderte Volumen $V_{eff}$.

9. Während des Betriebs der Kolbenpumpe wird laufend die geförderte Masse berechnet, indem das nach obigem Verfahren berechnete Volumen $V_{eff}$ mit der Dichte D multipliziert wird

Es ist möglich, die aus den Kalibriervorgängen ermittelten Werte in einer Datenmatrix, bezogen auf die Temperatureinstellungen, den Klebstofftyp und die Klebstoffviskosität abzuspeichern, um nicht nach jeder Änderung einen neuen Kalibriervorgang durchführen zu müssen.

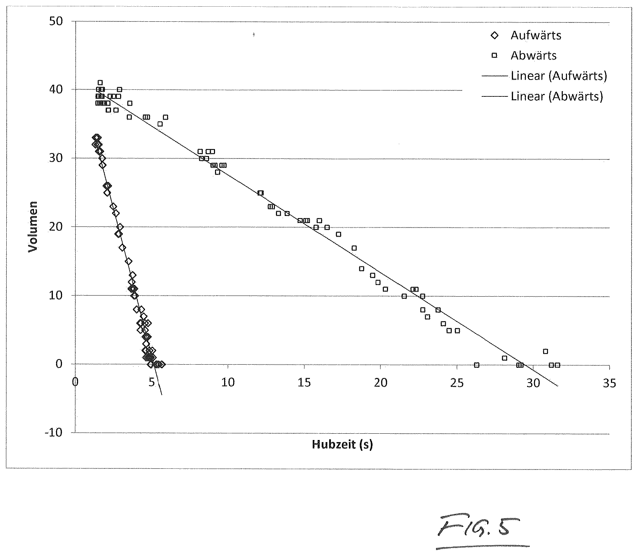

Fig. 5 zeigt wie sich bei der verwendeten Kolbenpumpe die Leckagezeit für den Doppelhub auf die Zeit für den Aufwärtshub und die Zeit für den Abwärtshub aufteilt. Die Zeiten für die beiden Hubbewegungen sind unterschiedlich groß. Auf einfache Weise lassen sich mit diesen beiden Zeiten über lineare Beziehungen die effektiv geförderten Volumen für jede Hubrichtung berechnen. Fig. 5 zeigt im linken steileren Graphen die Messpunkte bei der Aufwärtsbewegung des Kolbens. Für die Bewegung vom unteren Totpunkt zum oberen Totpunkt benötigt der Kolben ungefähr 5 Sek. bei einem Leckagevolumen von etwas mehr als vierzig Einheiten. Für die Bewegung vom oberen Totpunkt zum unteren Totpunkt ist eine wesentlich höhere Zeit erforderlich, nämlich nahezu 30 Sek., wie es durch die entlang der weniger stark geneigten Linie verlaufenden Messpunkte verdeutlicht ist.

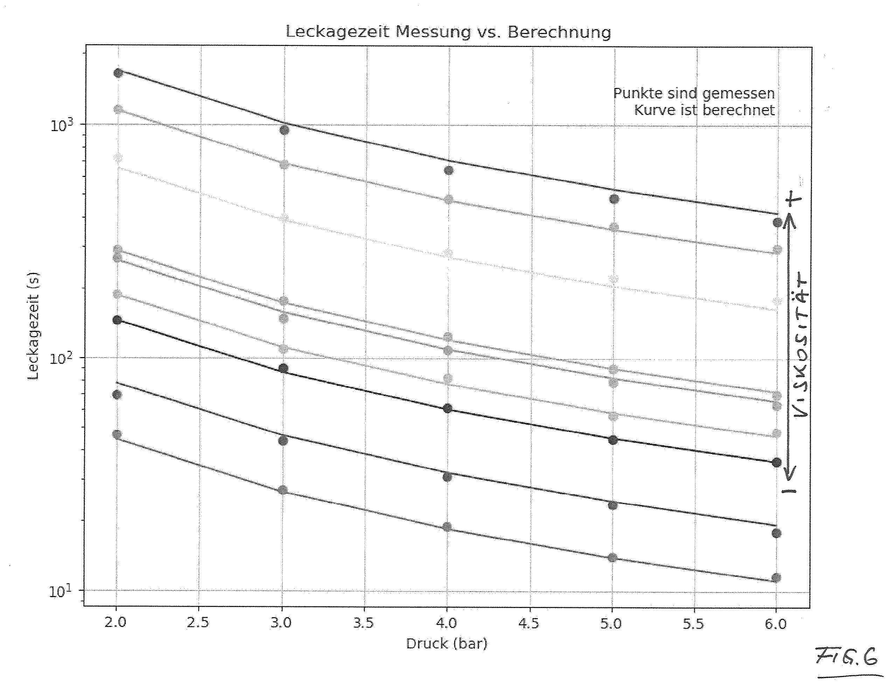

Fig. 6 zeigt verschiedene Kurven für Messungen bei Verwendung von Klebstoffen unterschiedlicher Viskosität, wobei jede Kurve für eine Viskosität steht. Die unterste Kurve veranschaulicht die Verhältnisse bei geringster Viskosität, die jeweils darüber befindlichen Kurven Klebstoffe höherer Viskosität. Für jede Kurve ist die Leckagezeit in Sekunden in Abhängigkeit vom Druck P, der auf den Kolben 10 des Antriebs wirkt, veranschaulicht. Die in Fig. 6 gezeigten Punkte sind gemessen, die Kurven berechnet.

Unter Berücksichtigung der vorstehenden Ziffern 1. bis 9. kann ein Berechnungsmodell angewendet werden, wenn der Druck P, der auf den Antrieb der Kolbenpumpe wirkt, verändert wird. Der Berechnungsvorgang kompensiert den Einfluss vom Druck P auf die geförderte Klebstoffmenge. Dazu werden die gemessenen Leckagezeiten $t_{Lauf}$ und $t_{Lab}$ korrigiert. Die neuen korrigierten Leckagezeiten werden wiederum als Eingabewerte für das obige Berechnungsverfahren verwendet. Das Berechnungsmodell kann anhand von vielen Versuchen entwickelt werden und ist auf eine bestimmte Kolbenpumpe zugeschnitten. Für andere Pumpen gelten andere spezifische Werte.

Die Masse von Klebstoff wird somit in zwei Schritten ermittelt. Zuerst werden mit Hilfe der berechneten Leckage das pro Zeiteinheit geförderte Klebstoffvolumen und die Anzahl der verarbeiteten Produkte ermittelt. In einem zweiten Schritt wird die Masse mit einer vorgängig ermittelten Dichte vom Klebstoff ermittelt. Es müssen somit Informationen zur Leckage und zur Dichte ermittelt werden, bevor die geförderte Masse berechnet werden kann. Aufgrund dieser Vorgehensweise ist es dem Anwender möglich, die aufgetragene Klebstoffmasse pro Produkt zu kennen.

Bezugszeichenliste

| | |
|---|---|
| 1 | Klebstofftank |
| 2 | Heizelement |
| 3 | Kolbenpumpe |
| 4 | Lochblech |
| 5 | Ansaugraum |
| 6 | Druckanschluss |
| 7 | Klebstofffilter |
| 8 | Druckverteiler |
| 9 | Abgang |
| 10 | Kolben |
| 11 | Kolbenstange |

| 12 | Druckregler |
| 13 | Manometer |
| 14 | Solenoid-Ventil |
| 15 | Elektronikprint |
| 16 | Hall-Sensor |
| 17 | Hall-Sensor |
| 18 | Kolben |
| 19 | Gehäuse |
| 20 | Rückschlagventil oben |
| 21 | Rückschlagventil unten |
| 22 | Zylinderbohrung |
| 23 | Kugel |
| 24 | Kugel |
| 25 | Pfeil |
| 26 | Pfeil |
| 27 | Pfeil |
| 28 | Durchgang |
| 29 | Überströmkanal |
| 30 | Durchtrittsöffnung |
| 31 | Raum |
| 32 | Verschlussstopfen |
| 33 | Dynamische Dichtung |
| 34 | Druckkanal |
| 35 | Pfeil |
| 36 | Druckverteiler |
| 37 | Pfeil |
| 38 | Ringmagnet |
| 39 | Drucksensor |

**Patentansprüche**

1. Verfahren zum Bestimmen eines von einer doppeltwirkenden, pneumatisch angetriebenen Kolbenpumpe (3) zu einem Verbraucher effektiv geförderten Volumens $V_{eff}$ eines flüssigen Mediums, insbesondere eines erhitzten Klebstoffs, wobei die Kolbenpumpe (3) Leckage behaftet ist, mit folgenden Merkmalen, bei Einwirkung eines konstanten Drucks auf einen Antrieb der Kolbenpumpe (3) und Ausführung mindestens eines Doppelhubs der Kolbenpumpe (3) von deren einem Totpunkt zu deren anderem Totpunkt und zurück zum einen Totpunkt:

    a. ohne dass die Kolbenpumpe (3) das Medium zum Verbraucher fördern kann, wird eine Leckagezeit $t_{L\ auf}$ für einen Hub der Kolbenpumpe (3) von deren unterem Totpunkt bis zu deren oberem Totpunkt gemessen,
    b. ohne dass die Kolbenpumpe (3) das Medium zum Verbraucher fördern kann, wird eine Leckagezeit $t_{L\ ab}$ für einen Hub der Kolbenpumpe (3) von deren oberem Totpunkt bis zu deren unterem Totpunkt gemessen,
    c. für den Hub der Kolbenpumpe (3) vom unteren Totpunkt zum oberen Totpunkt wird ein Quotient zwischen einem theoretisch ohne Leckage geförderten Volumen des Mediums $V_{auf}$ der Kolbenpumpe (3) und der Leckagezeit $t_{L\ auf}$ ermittelt,
    d. für den Hub der Kolbenpumpe (3) vom oberen Totpunkt zum unteren Totpunkt wird ein Quotient zwischen einem theoretisch ohne Leckage geförderten Volumen $V_{ab}$ der Kolbenpumpe (3) und der Leckagezeit $t_{L\ ab}$ ermittelt.
    e. beim Fördern des Mediums zum Verbraucher wird für den Hub der Kolbenpumpe (3) vom unteren Totpunkt zum oberen Totpunkt die Zeit $t_{auf}$ und für den Hub der Kolbenpumpe (3) vom oberen Totpunkt zum unteren Totpunkt die Zeit $t_{ab}$ gemessen,
    f. das effektiv geförderte Volumen $V_{eff}$ wird gemäß

$$V_{eff} = \left(V_{auf} - \frac{V_{auf}}{t_{L\ auf}} \times t_{auf}\right) + \left(V_{ab} - \frac{V_{ab}}{t_{L\ ab}} \times t_{ab}\right)$$

multipliziert mit der Anzahl der Doppelhübe ermittelt.

**2.** Verfahren nach Anspruch 1, wobei das effektiv geförderte Volumen $V_{eff}$ des geförderten Mediums bezüglich seiner Masse m bestimmt wird und die Dichte D des Mediums gemäß

$$D = \frac{m}{V_{eff}}$$

berechnet wird.

**3.** Verfahren nach Anspruch 2, wobei beim Fördern des Mediums zum Verbraucher laufend die geförderte Masse des Mediums berechnet wird, indem das berechnete, effektiv geförderte Volumen $V_{eff}$ mit der Dichte D multipliziert wird.

**4.** Verfahren nach einem der Ansprüche 1 bis 3, wobei nach jeder Änderung der Temperatureinstellungen des zum Verbraucher zu fördernden Mediums und/oder nach jeder Änderung des flüssigen Mediums, insbesondere des erhitzten Klebstoffs, und/oder jeder Änderung des auf den Antrieb der Kolbenpumpe (3) wirkenden Drucks die Verfahrensschritte wiederholt werden.

**5.** Verfahren nach einem der Ansprüche 1 bis 4, wobei die Leckagezeiten $t_{L\,auf}$ und $t_{L\,ab}$ und/oder eine Gesamtleckagezeit $t_{Leck}$ vor Beginn einer Produktion, insbesondere automatisch vor Beginn der Produktion gemessen wird/werden.

**6.** Verfahren nach einem der Ansprüche 1 bis 5, wobei Leckagezeiten und/oder Dichten pro Mediumtyp, insbesondere Klebstofftyp, und Temperatur abgespeichert werden, zwecks Verwendung bei späteren Produktionen unter vergleichbaren Bedingungen, ohne erforderliche erneute Bestimmung.

**7.** Verfahren nach einem der Ansprüche 1 bis 6, wobei bei einer Veränderung des Drucks auf den Antrieb der Kolbenpumpe (3) die zum Ausgangsdruck gemessenen Leckagezeiten $t_{L\,auf}$ und $t_{L\,ab}$ bzw. deren Gesamtleckagezeit $t_{Le\text{-}ck}$ anhand eines auf Versuchen basierenden Berechnungsmodells korrigiert werden.

**8.** Verfahren nach einem der Ansprüche 1 bis 7, wobei bei Ermittlung von starken Abweichungen der aktuell gemessenen Leckagezeiten von abgespeicherten Werten der Leckagezeiten eine Meldung, insbesondere betreffend Verschleiß der Kolbenpumpe (3), ausgegeben wird.

**9.** Verfahren nach einem der Ansprüche 1 bis 8, wobei Umkehrpositionen eines Kolbens (10) der Kolbenpumpe (3) und/oder Zwischenpositionen des Kolbens (10) zwischen dessen Umkehrpunkten mittels Hall-Sensoren (16, 17) ermittelt werden.

**10.** Verfahren nach Anspruch 9, wobei das effektiv geförderte Volumen und/oder die geförderte Masse aufgrund Kenntnis der Position des Kolbens (10) berechnet wird bzw. werden.

**Claims**

**1.** Method for determining a volume $V_{eff}$ of a liquid medium, in particular a heated adhesive, effectively delivered to a consumer by a double acting, pneumatically driven piston pump (3), wherein the piston pump (3) is subject to leakage, having the following features when a constant pressure is acting on a drive of the piston pump (3) and at least one double stroke of the piston pump (3) from one dead center position thereof to the other dead center position thereof and back to the first dead center position is carried out:

    a. without the piston pump (3) being able to deliver the medium to the consumer, a leakage time $t_{L\,auf}$ for one stroke of the piston pump (3) from the bottom dead center position thereof to the top dead center position thereof is measured,
    b. without the piston pump (3) being able to deliver the medium to the consumer, a leakage time $t_{L\,ab}$ for one stroke of the piston pump (3) from the top dead center position thereof to the bottom dead center position thereof is measured,
    c. a quotient of a volume of the medium $V_{auf}$ theoretically delivered by the piston pump (3) without leakage and of the leakage time $t_{L\,auf}$ is determined for the stroke of the piston pump (3) from the bottom dead center position to the top dead center position,

d. a quotient of a volume $V_{ab}$ theoretically delivered by the piston pump (3) without leakage and of the leakage time $t_{L\,ab}$ is determined for the stroke of the piston pump (3) from the top dead center position to the bottom dead center position,

e. the time $t_{auf}$ for the stroke of the piston pump (3) from the bottom dead center position to the top dead center position and the time $t_{ab}$ for the stroke of the piston pump (3) from the top dead center position to the bottom dead center position is measured as the medium is delivered to the consumer,

f. the effectively delivered volume $V_{eff}$ is determined multiplied by the number of double strokes in accordance with

$$V_{eff} = \left(V_{auf} - \frac{V_{auf}}{t_{L\,auf}} \times t_{auf}\right) + \left(V_{ab} - \frac{V_{ab}}{t_{L\,ab}} \times t_{ab}\right)$$

2. Method according to Claim 1, wherein the effectively delivered volume $V_{eff}$ of the medium delivered is determined in terms of its mass m, and the density D of the medium is calculated in accordance with

$$D = \frac{m}{V_{eff}}$$

3. Method according to Claim 2, wherein, as the medium is being delivered to the consumer, the delivered mass of the medium is calculated continuously by multiplying the calculated effectively delivered volume $V_{eff}$ by the density D.

4. Method according to any one of Claims 1 to 3, wherein the method steps are repeated after each change of the temperature settings of the medium to be delivered to the consumer and/or after each change of the liquid medium, in particular of the heated adhesive, and/or each change of the pressure acting on the drive of the piston pump (3).

5. Method according to any one of Claims 1 to 4, wherein the leakage times $t_{L\,auf}$ and $t_{L\,ab}$ and/or a total leakage time $t_{Leck}$ are/is measured before the beginning of production, in particular automatically before the beginning of production.

6. Method according to any one of Claims 1 to 5, wherein leakage times and/or densities are stored for each type of medium, in particular type of adhesive, and temperature, for the purpose of use in subsequent production processes under comparable conditions without the need for redetermination.

7. Method according to any one of Claims 1 to 6, wherein the leakage times $t_{L\,auf}$ and $t_{L\,ab}$ or the total leakage time $t_{Leck}$ thereof measured for the output pressure are/is corrected by means of a calculation model based on tests if there is a change in the pressure on the drive of the piston pump (3).

8. Method according to any one of Claims 1 to 7, wherein a message, in particular a message relating to wear of the piston pump (3), is output if large deviations in the currently measured leakage times from stored values of the leakage times are detected.

9. Method according to any one of Claims 1 to 8, wherein reversal positions of a piston (10) of the piston pump (3) and/or intermediate positions of the piston (10) between the reversal points thereof are detected by means of Hall effect sensors (16, 17).

10. Method according to Claim 9, wherein the effectively delivered volume and/or the delivered mass are/is calculated on the basis of a knowledge of the position of the piston (10).

**Revendications**

1. Procédé permettant de déterminer un volume effectivement refoulé $V_{eff}$ d'une pompe à piston (3) à double effet et à entraînement pneumatique à un consommateur pour un milieu liquide, en particulier un adhésif chauffé, la pompe à piston (3) étant affectée par des fuites, avec les particularités suivantes, sous l'effet d'une pression constante sur un entraînement de la pompe à piston (3) et à l'exécution d'au moins une course double de la pompe à piston (3) d'un point mort de celle-ci à l'autre point mort de celle-ci et en revenant audit un point mort :

a. une durée de fuite $t_{L\,auf}$ pour une course de la pompe à piston (3) de son point mort bas à son point mort haut est mesurée sans que la pompe à piston (3) puisse refouler le milieu vers le consommateur,

b. une durée de fuite $t_{L\,ab}$ pour une course de la pompe à piston (3) de son point mort haut à son point mort bas est mesurée sans que la pompe à piston (3) puisse refouler le milieu vers le consommateur,

c. pour la course de la pompe à piston (3) du point mort bas au point mort haut, un quotient entre un volume théoriquement refoulé sans fuite du milieu $V_{auf}$ de la pompe à piston (3) et la durée de fuite $t_{L\,auf}$ est déterminé,

d. pour la course de la pompe à piston (3) du point mort haut au point mort bas, un quotient entre un volume théoriquement refoulé sans fuite $V_{ab}$ de la pompe à piston (3) et la durée de fuite $t_{L\,ab}$ est déterminé,

e. lorsque le milieu est refoulé vers le consommateur, la durée $t_{auf}$ est mesurée pour la course de la pompe à piston (3) du point mort bas au point mort haut, et la durée $t_{ab}$ est mesurée pour la course de la pompe à piston (3) du point mort haut au point mort bas,

f. le volume effectivement refoulé $V_{eff}$ est multiplié par le nombre des courses doubles selon

$$V_{eff} = \left( V_{auf} - \frac{V_{auf}}{t_{L\,auf}} \times t_{auf} \right) + \left( V_{ab} - \frac{V_{ab}}{t_{L\,ab}} \times t_{ab} \right).$$

2. Procédé selon la revendication 1, dans lequel le volume effectivement refoulé $V_{eff}$ du milieu refoulé par rapport à sa masse m est déterminé, et la densité D du milieu est calculée selon

$$D = \frac{m}{V_{eff}}.$$

3. Procédé selon la revendication 2, dans lequel, lorsque le milieu est refoulé vers le consommateur, la masse refoulée du milieu est calculée en continu en ce que le volume effectivement refoulé $V_{eff}$ calculé est multiplié par la densité D.

4. Procédé selon l'une quelconque des revendications 1 à 3, dans lequel les étapes de procédé sont répétées après chaque variation des réglages de température du milieu à refouler vers le consommateur et/ou après chaque variation du milieu liquide, en particulier de l'adhésif chauffé, et/ou après chaque variation de la pression agissant sur l'entraînement de la pompe à piston (3).

5. Procédé selon l'une quelconque des revendications 1 à 4, dans lequel les durées de fuite $t_{L\,auf}$ et $t_{L\,ab}$ et/ou une durée de fuite totale $t_{Leck}$ sont mesurées avant le début d'une production, en particulier automatiquement, avant le début de la production.

6. Procédé selon l'une quelconque des revendications 1 à 5, dans lequel les durées de fuite et/ou les densités par type de milieu, en particulier par type d'adhésif, et la température sont mémorisées en vue d'une utilisation dans des productions ultérieures sous des conditions comparables sans nécessiter une nouvelle détermination.

7. Procédé selon l'une quelconque des revendications 1 à 6, dans lequel, dans le cas d'une variation de la pression sur l'entraînement de la pompe à piston (3), les durées de fuites $t_{L\,auf}$ et $t_{L\,ab}$ mesurées à la pression de sortie ou la durée de fuite totale $t_{Leck}$ de celle-ci sont corrigées à l'aide d'un modèle de calcul basé sur l'expérimentation.

8. Procédé selon l'une quelconque des revendications 1 à 7, dans lequel un message, en particulier concernant l'usure de la pompe à piston (3), est délivré lorsque d'importants écarts des durées de fuite actuellement mesurées par rapport aux valeurs mémorisées des durées de fuite sont déterminés.

9. Procédé selon l'une quelconque des revendications 1 à 8, dans lequel des positions d'inversion d'un piston (10) de la pompe à piston (3) et/ou des positions intermédiaires du piston (10) entre les points d'inversion de celui-ci sont déterminées au moyen de capteurs à effet Hall (16, 17).

10. Procédé selon la revendication 9, dans lequel le volume effectivement refoulé et/ou la masse refoulée est calculé(e)/sont calculés sur la base de la connaissance de la position du piston (10).

Fig. 1

Fig. 2

FIG. 3

FIG. 4

FIG. 5

Leckagezeit Messung vs. Berechnung

Punkte sind gemessen
Kurve ist berechnet

VISKOSITÄT

Druck (bar)

Leckagezeit (s)

FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016010597 A1
- EP 2732884 A2

- EP 1907806 B1